# EUROPEAN PATENT APPLICATION

(11) **EP 3 586 685 A1**
(43) Date of publication of application: **01.01.2020**
(21) Application number: 18179432.2
(22) Date of filing: 25.06.2018
(51) Int. Cl.: A47J 19/02, A47J 43/046, A47J 43/07, A47J 43/25, A47J 43/042

(54) **A JUICER AND A JUICING METHOD**

(71) Applicant: Koninklijke Philips N.V., 5656 AE Eindhoven (NL)
(72) Inventor: OBERSTEINER, Heimo, 5656 AE Eindhoven (NL); TE VELDE, Mart Kornelis-Jan, 5656 AE Eindhoven (NL)
(74) Representative: de Haan, Poul Erik

(57) **Abstract**

A juicer comprises a rotary cutter such as a blending knife and a filter mounted beneath the rotary cutter. The filter has a bowl shape with a lower center so that juice runs down to the center. The rotary cutter creates a circulatory flow, which performs a self-cleaning function of the filter. The cutting function may be controlled to vary the juice characteristics and preferably also the characteristics of the filter may be controlled.

## Description

### FIELD OF THE INVENTION

This invention relates to juicers.

### BACKGROUND OF THE INVENTION

Healthy fruit (and/or vegetable) drinks are increasingly popular, and many different types of kitchen appliance are available for blending and/or juicing to create these drinks.

Different ingredients will give rise to different consistencies. The consistencies may be categorized as mousse, thick smoothie, thin smoothie, fibrous juice and clear juice.

Juicers, and more generally food processors, blenders, masticators, smoothie makers and other kitchen devices, produce beverages with one or two of these categories of consistency depending on the fruit or vegetable.

For example, blenders and smoothie makers generally produce mousse or thick smoothies because they keep all fibers in the beverage. By adding additional fluids like water or milk, the consistency can be changed to a thin smoothie or even a fibrous juice for some fruits. A disadvantage of this process is that the beverage is often tasteless because of the dilution.

Masticators and centrifugal juicers generally produce mainly clear and fibrous juice consistencies by separating solid and liquid contents of the fruit or vegetables by the use of sieves and meshes. The consistency is strongly dependent on the fruit and device type. Some devices are also capable of producing smoothies as a second device setting.

The consistency of the beverage mainly depends on the amount of solids (fibers) in the specific fruit or vegetable e.g. cellulose and on the processing principle.

Most existing products offer one or at most two consistency settings (e.g. clear juice and fibrous juice). Most existing kitchen devices are also limited to some fruit and vegetable types which match the device process.

One known way to provide a more selectable consistency is to use a so-called peeling tube, which is inserted into a centrifuge drum to a controllable depth. Juice of selectable thickness is then delivered by the kinetic energy of the centrifuge rotation. However, this is difficult to control and results in a complex appliance.

It would be desirable to be able to produce fresh juice from fruits and vegetables with the option to freely choose the consistency of the beverage for every fruit or vegetable, according to personal taste preferences or health needs (for example a need for dietary fibers). There is a need for this flexibility in an appliance which is simple to manufacture and simple to use.

It would also be desirable to be able to process many different food ingredients with a single appliance so that the number of appliances needed may be reduced.

### SUMMARY OF THE INVENTION

The invention is defined by the claims.

According to examples in accordance with an aspect of the invention, there is provided a juicer for extracting juice from food ingredients comprising:
a cavity for receiving the food ingredients;
a rotary cutter in the cavity for releasing juice from the food ingredients, wherein the rotary cutter is disposed above a base of the cavity;
a filter mounted beneath the rotary cutter;
a drive system for rotating the rotary cutter to cut the food ingredients in the drum; and
a juice outlet for collecting juice after passing through the filter,
wherein the filter has a bowl shape with a center and an outer rim, wherein the center is lower than the outer rim.

This juicer is able to control the consistency of the output juice by controlling the time during which the rotary cutter is operated and/or changing the characteristics of the filter. The filter slopes down towards the center. This means that the rotary cutter creates a circulatory flow over the surface of the filter. The rotary cutter for example drives the contents of the cavity upwards, and they then flow down the outer wall of the cavity and across the filter surface. This provides an automatic filter cleaning function. Thus, by providing filtering while the rotary cutter is running, the hydrodynamic forces urge the liquid through the filter (the filter is static so does not rely on centrifugal forces) and also a self-cleaning flow is provided over the filter surface.

The filter may have an adjustable filter characteristic. By this is meant the size of particles able to pass the filter.

A basic option is to provide different filter designs, so a user can choose a filter which matches the desired juice characteristics. However, a preferred option is to provide an adjustable filter, so that the juice output characteristics may be selected in a simple manner as part of the settings of the juicer.

The surface of the filter may an undulating shape. This may be used to improve the self-cleaning function, by preventing particles becoming lodged in the filter openings.

The bowl shape may for example have a slope angle between the center and the rim in the range of 10 to 30 degrees. This provides a compromise between ensuring a flow across the filter surface and enabling a compact design.

The outer rim of the filter preferably extends beyond the rotary cutter. In other words, the area of the filter is larger than the area covered by the rotary cutter. This enables a rapid delivery of filtered juice. The filter for example covers the base of the cavity. It will be understood therefore that the filter is beneath the rotary cutter in the sense that at least a portion of the filter is directly beneath the rotary cutter.

There is preferably a gap between the filter and the nearest part of the rotary cutter of at least 5mm, for example at least 10mm. This prevents clogging of the space between the rotary cutter and the filter, and thus ensures that the desired circulatory flow remains effective.

The filter may comprise a central opening, wherein the drive system comprises a drive shaft for the rotary cutter which passes through the central opening.

This provides a simple assembly of the components.

The filter may be fixed, for example the cavity forms a jug which is cleaned as a single unit with the filter and cutter in place, or it may be removable for cleaning (after the rotary cutter is first removed). In the case of a removable filter, the user may select one of a set of filters to use for a particular juicing operation.

The filter may comprise first and second discs which are rotatable relative to each other, thereby to open and close the filter openings of the filter.

The filter may for example be closed during an initial blending process. Thus, the blending may be controlled to achieve a desired average particle size before any juice is released.

The relative rotation of the first and second discs may also be used to vary the size of filter openings of the filter. In this way, a particle size range in the delivered juice may additionally be selected.

In one set of examples, there may be a manual input to allow a user to rotate the first and second discs relative to each other. Thus, the user can choose when to release the juice as a first way of controlling the juice consistency, and optionally also choose the filter setting as a second way to control the juice consistency.

In another set of examples, there is an actuator for automatically rotating the first and second discs relative to each other, under the control of the drive system. The drive system may then implement a set juicing procedure, based on a user input. The user input may for example select a type of food ingredient and a desired juice consistency.

The rotary cutter for example comprises a blending knife. It may comprise a pair of blending knives which rotate in opposite directions. This provides flow conditions which may improve the self-cleaning function.

The invention also provides a juicing method for extracting juice from food ingredients comprising:
receiving the food ingredients in a cavity of a juicer;
releasing juice from the food ingredients using a rotary cutter which is disposed above a base of the cavity;
passing the juice through a filter which is mounted beneath the rotary cutter; and
collecting juice after passing through the filter,
wherein the filter has a bowl shape with a center and an outer rim, wherein the center is lower than the outer rim such that a flow is generated across the filter surface by the rotary cutter.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a juicer;
Figure 2 shows an example of a filter design used in the juicer of Figure 1;
Figure 3 shows how the juicer of Figure 1 is used; and
Figure 4 shows in perspective view one possible juicer design.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a juicer comprising a rotary cutter such as a blending knife and a filter mounted beneath the rotary cutter. The filter has a bowl shape with a lower center so that juice runs down to the center. The rotary cutter creates a circulatory flow, which performs a self-cleaning function of the filter. The cutting function may be controlled to vary the juice characteristics and preferably also the characteristics of the filter may be controlled.

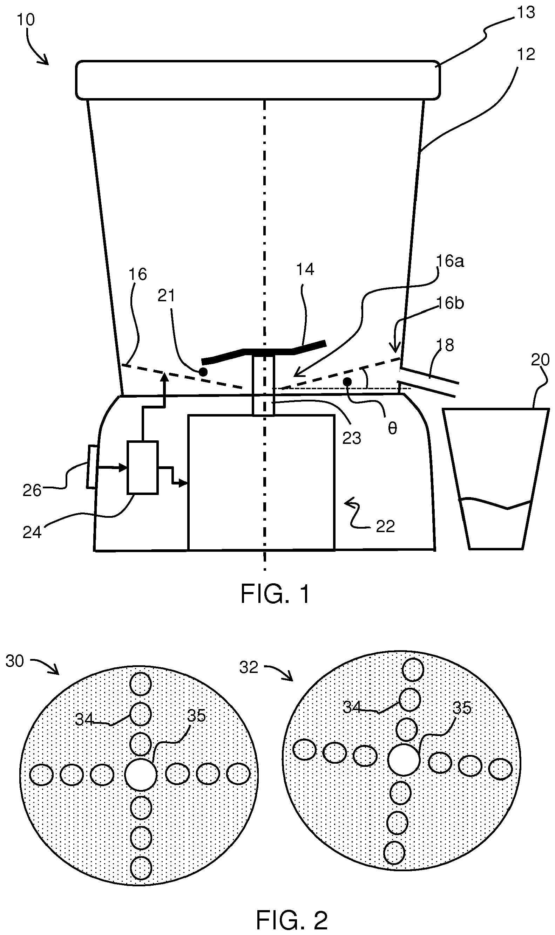

Figure 1 shows a juicer 10 for extracting juice from food ingredients. It comprises a cavity 12 for receiving the food ingredients and a lid 13. The cavity is for example in the form of a jug.

A rotary cutter 14 in the form of a blender knife is provided near the base of the cavity for releasing juice from the food ingredients. The rotary cutter is disposed above the base of the cavity so that a flow beneath the rotary cutter is possible.

A filter 16 is mounted beneath the rotary cutter. A juice outlet 18 is provided for collecting juice in an external receptacle 20 after passing through the filter.

A drive system 22 is provided for rotating the rotary cutter 14 to cut the food ingredients in the cavity 12. The drive system has a drive shaft 23 for the rotary cutter 14 which passes through a central opening of the filter 16. The drive system is a part of a base of the juicer, and the jug is removable from the base for cleaning.

The filter 16 has a bowl shape with a center 16a (which defines the central opening) and an outer rim 16b. The center 16a is lower than the outer rim 16b so that liquid flows under gravity from the outer rim 16b to the center 16a.

The filter may have a locally flat surface, for example forming part of a conical surface. However, the surface of the filter may instead have an undulating shape. By this is meant that the surface is locally not flat, for example so that the filter openings are on a locally steeper gradient. This assists particles flowing past the filter openings in the presence of the general flow, rather than becoming lodged in the filter openings. This improves the self-cleaning function, by preventing particles becoming fixed at the filter openings.

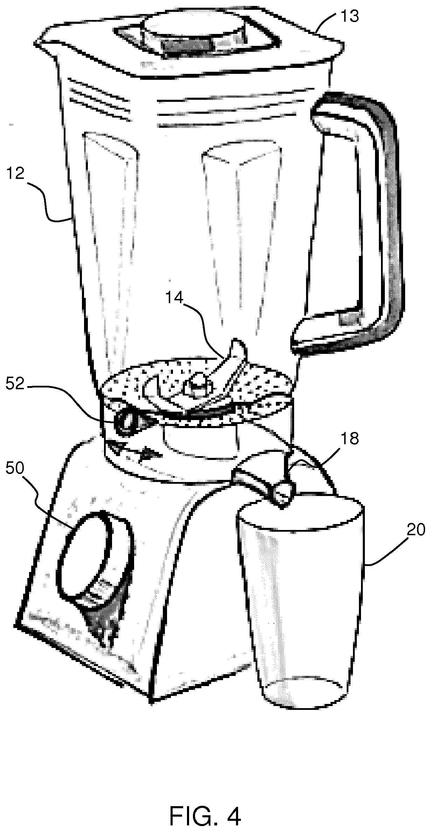

The undulations may be in the direction from the center to the outer rim (i.e. the radial line shape may not be straight) and/or the undulations maybe around the angular path (i.e. a circumferential line shape may not be in a plane - this can be seen in Figure 4).

The filter surface for example slopes with a slope angle θ between the center and the rim (i.e. relative to the base of the cavity) preferably in the range of 10 to 30 degrees (although a lower limit of 5 degrees is also possible and an upper limit of 45, 50, 55 or 60 degrees is also possible). The angle range applies both to undulating and non-undulating designs. This provides a compromise between ensuring a flow across the filter surface and enabling a compact design (in that the space beneath the filter is wasted space).

The filter covers an area larger than the circular area covered by the rotary cutter. This enables a rapid delivery of filtered juice as there is a large filter area, for example covering the base of the cavity.

The is preferably a gap 21 between the filter (i.e. every point on the surface of the filter) and the nearest part of the rotary cutter of at least 5mm, for example at least 10mm. This prevents clogging of the space between the rotary cutter 14 and the filter 16, and thus ensures that the desired circulatory flow remains effective. The rotary cutter may have blades which all have an upward bend so that a relatively constant gap exists between the blades. Figure 1 instead represents a blade with one downwardly facing cutting blade and one upwardly facing cutting blade. Any blade design is possible. There may for example be two blades which rotate in opposite directions. This may provide a more rapid cutting process as well as a more turbulent flow which may be beneficial for increasing the flow through and across the filter.

The filter 16 is preferably controllable to allow liquid to pass or to block liquid from passing. It may also be controllable to set a filter characteristic, i.e. the size of particles able to pass.

The operation of the juicer may be entirely manual, so that the user selects when to turn on the motor and when to turn it off, and when to open or close the filter.

A more automated version is also possible, in which a controller 24 receives user input via an interface 26 and this is used (at least) to determine the time period of the blending operation. This time period may for example depend on the type of food ingredient, the quantity and the desired final juice consistency.

In an even more automated version, the controller also controls a timing of on/off setting of the filter and/or a filter hole size setting.

As shown in Figure 2, in one example the filter comprises first and second discs 30, 32 which are rotatable relative to each other. Each disc has a set of filter openings 34 disposed around the central opening 35. If they overlap, the overall filter is open, whereas if the openings do not overlap the filter is closed. An effective hole size can also be controlled by the degree of overlap. There may be an array of many hundreds of holes, and

Figure 2 is a simplified drawing for the purposes of explanation.

The choice of filter hole size depends on the desired consistency of the juice to pass through the filter. The filter may comprise a perforated sieve as shown in simplified form in Figure 2 or a wire mesh sieve.

Typical hole sizes are:
0.3 mm - 0.6 mm for clear juice or fibrous juice, depending on the ingredients
0.6 mm - 1.0 mm for a thin smoothie
1.0 mm - 1.5 mm for a thick smoothie
> 1.5 mm for a mousse.

Thus, the adjustable filter may be designed to enable adjustment between an hole size of 0.3 mm to 2 mm for example, and more generally, between a hole size of less than 0.5 mm (preferably less than 0.4 mm) to a hole size of more than 1.5 mm. The most relevant parameter for the hole size is the smallest linear dimension of the hole. For example, a square hole and a rectangular hole of the same minimum side length can pass the same size of spherical particle. When the filter is adjusted, the effective hole shape may not remain constant (as is the case for partially overlapping circular holes as shown in Figure 2), but the smallest linear dimension is adjusted so that the filter performance is changed. Thus, the hole size may be taken to be the smallest linear dimension of the hole.

The filter may for example be closed during an initial blending process. Thus, the blending time may be selected to achieve a desired average particle size before any juice is released through the filter. Changing the effective hole size of the filter may also be used to control the juice characteristics.

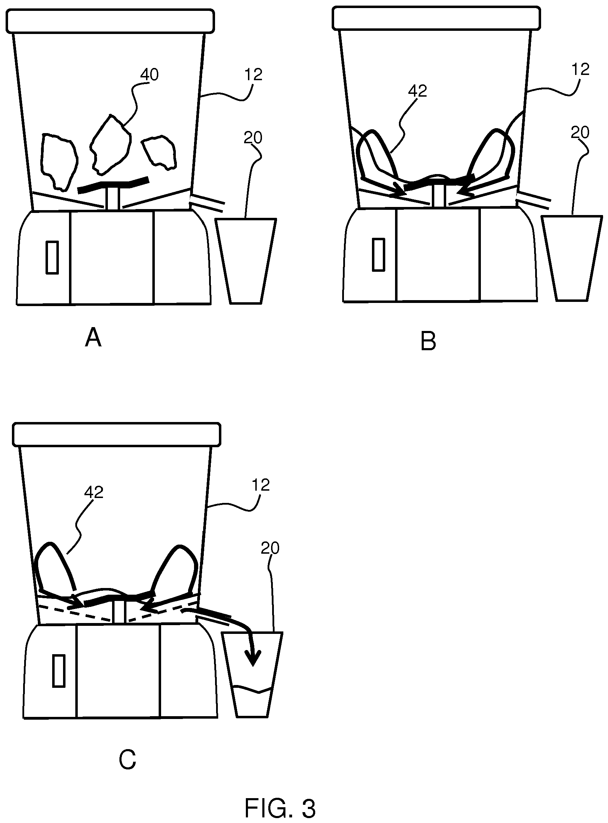

Figure 3 shows one preferred operation sequence.

In Figure 3A food ingredients 40 such as fruit or vegetables are loaded into the cavity. The filter is closed at this time.

Figure 3B shows the circulatory flow 42 created by the blending process. The blending process continues for a time which is selected to achieve a desired consistency of the blended food ingredients.

Figure 3C shows the juice release. The filter is opened to allow juice to pass. The blending continues and this creates hydrodynamic forces which drive the blended food ingredients in the same circulatory flow 42 over and through the filter. In particular, the rotary cutter drives the contents of the cavity upwards and outward, and they then flow down the outer wall of the cavity and across the filter surface. This provides an automatic filter cleaning function.

The blender blade and filter may be fixed parts of the cavity (i.e. the jug) so that the jug is simply cleaned as one item.

Figure 4 shows a basic implementation of based on this approach.

The juicer has a motor control input 50 for starting and stopping the motor, and optionally also controlling the speed. It also has a manual input 52 for controlling the filter, i.e. opening and closing the filter, and preferably also controlling an effective filter size.

The examples above have a filter with controllable effective filter hole size. An alternative is to have different filter designs, so a user can choose a filter which matches the desired juice characteristics. For example, the blender blade 14 may be removed and then the filter may be removed. There may be different blender blade types as well as different filter types.

There may instead be an actuator such as motor (or a controllable coupling to the existing motor) for automatically rotating the first and second discs relative to each other, under the control of the drive system.

The drive system may then implement a set juicing procedure, based on a user input. The user input may for example select a type of food ingredient, indicate a quantity, and select a desired juice consistency. The speed as well as time of blending may be controlled in this way.

If the filter is kept closed, the juicer may simply be used as a blender. Thus, the user may opt to use the juicer as a blender. This extends the range of possible uses of the appliance.

The invention may be applied to small kitchen appliances, for example for one glass of juice with a jug capacity of approximately 0.5 liters as well as to large devices for entire families with a drum capacity up to 5 liters.

By way of example, the cavity diameter may be of the order of 100 mm and the cavity height may be of the order of 200 mm. The dimensions of course depend on the desired volume capacity of the cavity.

By way of example, the blending process may be able to produce particles of size around 200 µm or less.

The invention enables a single appliance to be used when many different appliance would previously have been required. It may be used for vegetables, fruit, seeds, nuts and herbs, as it can perform both blending and juicing functions. It may be used to create clear juice, cloudy juice, smoothies, mousses, creams, pastes, soups, soy milk and almond milk.

In a most basic implementation, only the blending is controlled and the filter is always open. In a first refinement, the filter can be opened and closed, so that blending can be conducted without yet allowing juice to pass to the outlet. In a preferred further refinement, the filter function is adjustable as well, so that the filter function as well as the blending time may be used to control the juice consistency.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A juicer for extracting juice from food ingredients comprising:
a cavity (12) for receiving the food ingredients;
a rotary cutter (14) in the cavity for releasing juice from the food ingredients, wherein the rotary cutter is disposed above a base of the cavity;
a filter (16) mounted beneath the rotary cutter;
a drive system (22) for rotating the rotary cutter to cut the food ingredients in the cavity; and
a juice outlet (18) for collecting juice after passing through the filter,
wherein the filter (16) has a bowl shape with a center (16a) and an outer rim (16b), wherein the center is lower than the outer rim.

2. A juicer as claimed in claim 1, wherein the filter (16) has an adjustable filter characteristic.

3. A juicer as claimed in claim 1 or 2, wherein the surface of the filter has an undulating shape.

4. A juicer as claimed in any one of claims 1 to 3, wherein the bowl shape has a slope angle (θ) between the center and the rim in the range of 10 to 30 degrees.

5. A juicer as claimed in any one of claims 1 to 4, wherein the outer rim (16b) of the filter extends beyond the rotary cutter (14).

6. A juicer as claimed in claim 5, wherein the filter (16) covers the base of the cavity (12).

7. A juicer as claimed in any one of claims 1 to 6, wherein there is a gap (21) between the filter and the nearest part of the rotary cutter of at least 5mm, for example at least 10mm.

8. A juicer as claimed in any one of claims 1 to 7, wherein the filter comprises a central opening (35), wherein the drive system comprises a drive shaft (23) for the rotary cutter which passes through the central opening (35).

9. A juicer as claimed in any one of claims 1 to 8, wherein the filter comprises first and second discs (30, 32) which are rotatable relative to each other, thereby to open and close the filter openings of the filter.

10. A juicer as claimed in claim 9, wherein the first and second discs (30, 32) are rotatable relative to each other, thereby to vary the size of filter openings of the filter.

11. A juicer as claimed in claim 9 or 10, comprising a manual input (52) to allow a user to rotate the first and second discs relative to each other.

12. A juicer as claimed in claim 9 or 10, comprising an actuator for automatically rotating the first and second discs relative to each other, under the control of the drive system.

13. A juicer as claimed in any one of claims 1 to 12, wherein the rotary cutter (14) comprises a blending knife.

14. A juicer as claimed in claim 13, wherein the rotary cutter comprises a pair of blending knives which rotate in opposite directions.

15. A juicing method for extracting juice from food ingredients comprising:
receiving the food ingredients in a cavity of a juicer;
releasing juice from the food ingredients using a rotary cutter which is disposed above a base of the cavity;
passing the juice through a filter which is mounted beneath the rotary cutter; and
collecting juice after passing through the filter,
wherein the filter has a bowl shape with a center and an outer rim, wherein the center is lower than the outer rim such that a flow is generated across the filter surface by the rotary cutter.
